# EUROPEAN PATENT APPLICATION

(11) **EP 1 526 073 A1**
(43) Date of publication of application: **27.04.2005**
(21) Application number: 04000643.9
(22) Date of filing: 14.01.2004
(51) Int. Cl.: B64G 1/40, F03H 5/00

(54) **Equipment to nullify gravitational force**

(30) Priority: 20.10.2003 JP 2003393088
(71) Applicant: FUKAI, Kiyotatsu, Utsuomiyashi, 321-0138 (JP)
(72) Inventor: FUKAI, Kiyotatsu, Utsuomiyashi, 321-0138 (JP)
(74) Representative: Meissner, Bolte & Partner

(57) **Abstract**

Having the dream of a vehicle nullifying gravitation and flying in the air, the human race considered rockets that would fly with the reaction force of a giant pillar of flames. The human race thus consumed several trillions of dollars and overcame the tragedy of burning scores of people to death due to failure. [Constitution] This invention represents gravitation-nullifying equipment, which is designed to obtain floating power to eliminate gravitational force due to a reaction force created by expelled water from high-speed rotational, downward-directed nozzles (6) at a high speed, and to prevent most of the floating power, obtained from the reaction force, from being eliminated through the use of structural advantages of the equipment, i.e. by utilizing the force of synthetic vector (8) direction, gained from high-speed water fromdownward-directed nozzles (6).

## Description

### [Detailed Explanation of the Invention]

### [Technological Field to Which Invention Belongs]

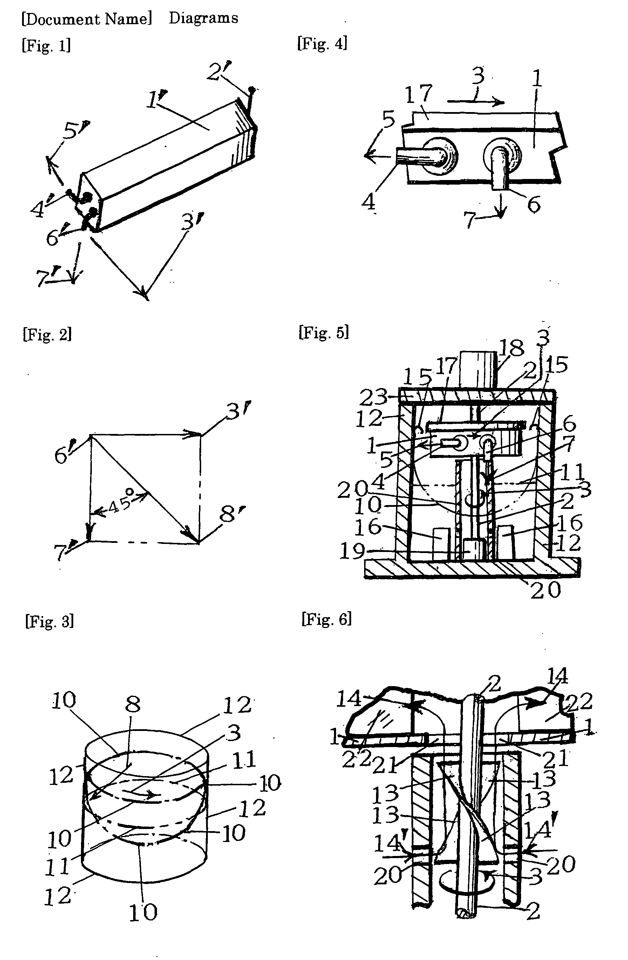

This invention belongs to the field of hydraulic rotating machinery, and it relates to a unique, so-far non-existent system, to nullify gravitation. Accordingly, to understand this invention, it is necessary to remember, in connection with Fig. 1, publicly known basic phenomena of hydraulics, which are quoted in hydraulic textbooks for graduate schools of universities.

When a robust box V, shown within the oblique view diagram in Fig. 1, is completely filled with water, and when nozzles 4' and 6' are revolved at a speed of V in the direction of arrow 3', with fixed point 2' as the center of rotation, when the nozzles 4' and 6' in the diagram are closed, and when the gravitational acceleration of water head H, based on normal acceleration, is g near the tips of nozzles 4' and 6', the formula1 H = V²/2g, can be established. The method of verifying this is omitted as it is publicly known. Next, while water is supplied from around point 2' into box 1' to a degree that the full water level within the box is maintained, when stoppers are removed from nozzle 4' and nozzle 6', whose opening diameters were equalized, and when water is expelled from their tips, water is spurted into the directions of 5' and 7', respectively. The speed of both water jets is publicly known as V = √2gH, and the expelling of water continues. On this occasion, the speed of water expelled from nozzle 4' is of course V. If p is set at the specific mass of water, and if Q is set at the water volume to be expelled during a unit time, it is well known that the reaction force pushing rotationally toward the revolving direction 3' will be F = ρQV. To reconfirm, this force F continually causes the rotation toward arrow 3' at a speed of V. Here, expelled water 5' from nozzle 4' continues to provide energy; i.e. Driving Force × Speed = F × V = pQV², to box 1' in the counter clockwise direction 3' in the unit time. On the other hand, the energy required in expelling the water from nozzles 4' and 6' at a speed of V, to bring the speed from 0 at the fixed point 2', the center of revolution, to the level of V and to feed water volume Q in the unit time will be 1/2ρQV² × 2 (for 2-nozzles or per pair). This is equal to the energy given in the unit time in expelling water from nozzle 4' to arrow 5', as already explained; i.e. F × V = ρQV², and it will be offset within the equipment as a whole, so that it will not emerge out of the equipment. Accordingly, for the continual revolution of box 1' toward the rotation direction 3', it is necessary to provide energy corresponding to the machinery loss portion, which is equivalent to the wind loss and bearing loss, from outside, because the equipment is not a perpetual motion machine.

The above is an explanation summary, quoted from the hydraulics textbook of a graduate school, which has a high reference value for this invention. This invention is quite an epoch-making technological achievement based on the development of equipment to nullify gravitation founded on the aforementioned reference material, which has to date not been used.

### [Conventional Technology]

For man to fly into the air nullifying gravitation, there have been no other ways but to use rockets or jet engines, which expel pillars of flames from their ends while carrying much fuel, and to fly based on the reaction of the process. As such, such huge expenses as adversely affecting a national budget have been openly used in the embellished name of national defense, and when an explosion occurs as a result of failure, a tragedy in which many people are burned to death was forcibly endured. Accordingly, the equipment to nullify gravitational force, based on this invention, will bring about an economic, industrial, and military revolution of the largest scale in the history of human beings. It will bring about a great renovation to the conventional technology for man, who has so far known only the method of reaching space due to a reaction from jetting gas.

### [Actual Form of Invention]

In this invention, the reaction force F = pQV will arise, as already explained, in connection with nozzle 4' in connection with Fig. I, when nozzles 4 and 6 spurt "expelled water arrows" 5 and 7, during the revolution of the hollow disk in the direction of arrow 3 at the speed of V, as shown in the partial plan of the hollow disk within Fig. 4. Naturally, the same reaction force F = pQV will also be generated for nozzle 6'. It is self evident that the similar reaction force F = pQV will also arise in nozzles 4 and 6 in Fig. 4. As in Fig. 1, the reaction force working on nozzle 4 in Fig. 4 in the equipment of this invention will revolve the hollow disk 1 in the direction of arrow 3, while the force working on nozzle 6 will serve as the power to nullify gravitation, propelling the entire equipment into the air. Arrow 7, showing the downward expelled water from the place of nozzle 6' in the front view drawing concerning the composite speed vector within Fig. 2, and arrow 3', showing the revolving direction, mutually have a relationship of 90 degrees at the speed of V, while their composite vector 8' will have a relationship of 45 degrees with the downward expelled water shown as arrow 7'. This verifies the fact that the downward expelled water arrow 7 in Fig. 4 cannot ram onto a flat bottom face near the water-conveyance panel 16 vertically mounted in the frame/tank 12. The expelled water arrow 7, from nozzle 6, will drop at an angle of 45 degrees, even if it falls on the flat bottom of the frame/tank 12, so that its shock and the reducing force, will be in accordance with the formula: F'= ρQV × sin 45°= ρQV × about 0.7. Even in this case, pQV × about 0.3 will serve as a upward propelling force from each nozzle 6, for the equipment as a whole. This is a benefit created by chance due to the design of the invention. For a realistic trial calculation, it is assumed that 1 unit of equipment has 4 nozzle 6s, with 1 unit for right rotation and 1 unit for leftward rotation combined as 1 set to offset the torques, and calculation is made as to the intensity of the force for propelling upward. In this case, it is assumed that the diameter of expelled water 7 from nozzle 6 is 0.05m, that its cross-sectional area A is 0.002m², with the total number of the nozzle 6 in the 2 units being 8. It is also assumed that the rotational diameter of nozzle 6 is 1m, that its speed is 100m/S; i.e. 1,909.85 rpm, and that ρ is 102kg, S²/m⁴. Because Q = AV in the case of this equipment, the outcome of the following formula: ρQV × 0.3 x 8 = ρAV × 0.3 × 8 = 102 × 0.002 × 100² × about 0.3 × 8 (units) = 4,896 (kg), will be the force to propel the equipment upwards. If most of the equipment is manufactured of reinforced plastic, spindle 2 can be relatively thin, and can be such an object, whose durability can be calculated by multiplying the resistance factor, capable of enduring the machinery loss and the loss related to water-pumping devices 13 and 20, by some safety ratio. Accordingly, the total weight may be 2,000 kg at maximum. Therefore, room for loading 2,896 kg (4,896 - 2,000) will arise as a result. Since this is not a perpetual movement machine, the equipment will stop if the power source for the motor 18 in Fig. 5 is turned off. The enforcement equipment of this invention may contribute to the occurrence of an epoch-making event, in which about 2 persons will be sent from Japan to the Moon or Mars. Because this invention is equipment logically and inevitably composed based on the combination of various kinds of phenomena quantitatively backed by authoritative textbooks of graduate schools for universities, there will be no possibility of failure, if design and manufacture are immediately undertaken. In addition, for reference, because the hollow disk 1 is revolving toward arrow 3 at a speed of V, the expelled water arrow 5 from nozzle 4 in Fig. 4 is spurted in the contrary direction toward arrow 5 at a speed of V, its speed in relation to the earth will be zero, so when the expelled water leaves nozzle 4 at each location, the expelled water will descend strictly downward. The water is expected to look as if it is a water curtain, with a round shape. Meanwhile, water that falls straight downward as shown by arrow 7 from nozzle 6, progresses naturally toward the synthetic vector arrow 8', due to the effect of the direction toward arrow 3, at the same V speed, as explained regarding Fig. 2. On this occasion, as with the case of arrow 8 shown in Fig. 3, the standstill-time water surface 11 will be guided by high-speed arrow 8, becoming a paraboloid of revolution 10. The water whose periphery is rising and which is rotating at a high speed will ram into the side of the frame/tank 12, while the water itself at the side will also become a. force, accelerated by centrifugal power, to press against the side wall of the frame/tank 12, because of the revolving movement at a speed close to V. Therefore, the movement energy of the arrow 8 water is consumed. For this reason, the source for shock onto the bottom face of the frame/tank 12 in Fig. 3 will almost disappear. It is accordingly clear that there is virtually no force reducing the reaction force F = pQV, which was applied by expelled arrow 7 from nozzle 6 in Fig. 4. Accordingly, most of the already explained 4,896 kg force from 8 nozzle 6's to propel the entire equipment upwards will remain. What should be noted here is that the enforcement equipment for this invention will be operated at a temperature of about minus 30°C, which is similar to the temperature at an altitude of 5,000 m. Therefore, a liquid that doesn't freeze at that temperature must be used for most of the liquid. Also, specific mass p of water, frequently used in this patent specification, represents, at an assumed temperature of 0°, 102.03kg, S²/m⁴, while flow volume every second Q = m³/S, and speed V = m/S, all in MKS units. At the enforcement equipment of this invention, a powerful horizontal component force will be generated, if the rotational spindle 2 is slightly inclined forward or backward, so that its forward/backward movement can be freely implemented.

Through the use of the attached diagram, the entire structure of the equipment for this invention will be explained. As shown in the diagram of a partial longitudinal section when the entire equipment is composed - in Fig. 5 - the cylindrical frame/tank 12 and its lid 23 will be manufactured with metal or reinforced plastic. A small-output vertically oriented motor 18, powered using batteries or some other power source, is fitted at the center of lid 23. The bearing for spindle 2 of the motor 18 is fixed to lid 23, and to its spindle 2, the hollow disk 1 and its upper lid 17 are fixed. The hollow disk 1 will naturally revolve together with spindle 2. Around the hollow disk 1, nozzle 4, whose expelled water 5 will spurt in the contrary direction to arrow 3, and nozzle 6, whose expelled water will be directed directly downward, are fixed as 1 set of nozzles, and multiple such units will be installed at equal distances around the hollow disk. On the bottom surface of the hollow disk 1, multiple diaphragms 22 will be set radially, and further fitted with lid 23. On the bottom of the frame/tank 12 to which the bearing 19 of the lower portion of spindle 2 is to be fitted, several water-conveyance panels 16 will be set in a radial manner, to control the high-speed rotation of water so that water will be prone to flow into multiple holes 14' of cylinder 20 for pumping-upwards, which will also be fixed to the bottom surface. The height of cylinder 20 for pumping-upwards will be arranged so as not to reach a water channel hole 21 at the lower center of the hollow disk 1. Because of the pumping-upwards work done by the spiral-shaped thin, long panel 13, which is fixed to spindle 2 in the partial cross-sectional diagram showing the pumping-upwards mechanism of the hollow disk 1 in Fig. 6, water will progress from hole 14' to arrow 14, due to the high-speed rotation of spindle 2. After passing through the water channel hole 21 at the lower, central part of the hollow disk 1, water will be sucked through internally by the centrifugal force. The water surface 11 at a standstill in time is shown in Fig. 3 and Fig. 5, but the water level is not necessarily meant to be one; it is only shown as a reference value. The object 15, shown in the partial cross-sectional diagram when the whole of Fig. 5 is composed, is a water ascent prevention metal bracket composed by fixing a metal circle, with a semi-circular cross-section as a halved round tube, to the inner wall of the frame/tank 1, and this will perform particularly significant work when the equipment is inclined.

### [Effects of Invention]

This use of this invention's equipment is expected to abolish helicopters throughout the world within 10 years, and to enable passenger aircraft to take off or land with quite a short runway. All vehicles and trains will be transferred to using this invention's equipment. Huge man-made structures will be carried from the earth to the Moon and Mars, and the rocket-based space travel will become a matter of a funny story in the past. Thus, the greatest economic and industrial reformation in the history of the human race will occur. Great changes will also take place in military situations. A new, great civilization of the 21st century is expected to blossom as a result. From the a foregoing, it is obvious that the present invention concerns not only an apparatus but also a method for nullifying gravitational force. Further, the invention is also referring to a model for explaining an idea to nullity gravitational force.

### [Simple Explanation of the Diagrams]

[Fig. 1] Oblique View Regarding the Basic Phenomenon, [Fig. 2] Front View of the Synthetic Vector of Speed, [Fig. 3] Diagram Showing Linear/Three Dimensional Synthetic Vector Relationships, [Fig. 4] Partial Front View of the Hollow Disk, [Fig. 5] Partial Cross-Sectional View When Assembled, [Fig. 6] Partial Cross-Sectional Diagram Showing the Pumping-upwards related Mechanism of the Hollow Disk

### [Explanations of Symbols]

1' Box, 2' Fixed point, 3' Arrow showing the rotation direction, 4' Nozzle, 5' Arrow showing the direction of expelled water, 6' Nozzle, 7' Arrow showing the direction of expelled water, 8' Arrow showing the synthetic vector of speed, 1 The partial front view of the hollowed disk, 2. Spindle, 3. Arrow showing the rotation direction, 4. Nozzle, 5. Arrow showing the direction of expelled water, 6. Nozzle, 7. Arrow showing the direction of expelled water, 8. Arrow showing the direction of the synthetic vector of speed, 10 Sketch of paraboloid of revolution shown three dimensionally and linearly, 11 Linearly shown water surface at a standstill in time, 12 Frame/water tank, 13 Side view of the spiral, thin panel, 14' Cylinder hole for entry by water pumped-upwards, 14 Arrow showing the channel of water pumped-upwards, 15 Ring-shaped, water ascent prevention metal bracket with a semi-circular cross-section, 16 Water-conveyance panel, 17 Upper lid over the hollow disk, 18 Motor, 19 Bearing, 20 cylinder for pumping water upwards, 21 Water channel hole at the lower center portion of the hollow disk, 22 Diaphragm, 23 Lid over the frame/tank.

## Claims

1. A system designed to nullify gravitational force, based on the following arrangements: a small-output vertically oriented motor, which is powered using batteries or another power source, is fixed to the upper center of a cylindrical frame and built in tank, while within a hollow disk that has a spindle connected to the shaft of the motor through a bearing and, being fixed to the spindle, can freely rotate, multiple, radially fixed diaphragms are attached; around the hollow disk, a nozzle expelling water in the reverse direction to the rotational direction of the hollow disk is fitted and another nozzle expelling water in a downward direction is fitted at a place suitably far enough apart from the first nozzle, with these nozzles being a pair; and multiple pairs of such nozzles are fixed at equal distances; while a cylinder with many water outlet holes in its lower portion and of a height not reaching or contacting the central hole of the hollow disk is set centrally on the frame/tank bottom near the bearing at the lower portion of the frame/tank, and around this cylinder, multiple, radially arranged water-conveyance panels are fitted; and thin plates, which are fixed to the spindle within the cylinder, which is fitted to the bottom face of the frame/tank, and which are revolved in close proximity to one another, to perform the work of pumping water up to the hollow disk, are set spirally.
